# EUROPEAN PATENT APPLICATION

(11) **EP 4 527 888 A1**
(43) Date of publication of application: **26.03.2025**
(21) Application number: 23198257.0
(22) Date of filing: 19.09.2023
(51) Int. Cl.: C08L 33/12

(54) **INORGANIC INFRARED ABSORBER IN RESIN COMPOSITION**

(71) Applicant: Trinseo Europe GmbH, 8808 Pfaeffikon (CH)
(72) Inventor: VU, Huyen, 8808 Pfaeffikon (CH); LAMOND, Ronson, 8808 Pfaeffikon (CH)
(74) Representative: SSM Sandmair

(57) **Abstract**

An IR-absorbing, impact modified (meth)acrylic composition is presented. The composition contains 1 to 55 wt% impact modifiers and low levels (0.0001 to 2.0 wt percent) of one or more tungsten oxide composite particles. Monolithic/co-extruded sheets, film and profiles of the inventive composition are useful in IR-shielding materials, including a heat shielding layer, thermal control layer, roofs, panels, external and internal coverings, and frames, in use for building, greenhouse panels, window, motor vehicles, rail vehicles, electronics, skylights, window glazing, marine port lighting, roofing covers, roofs for patio, pergola, sunrooms, carports, agricultural films, protective films, siding, window profiles, awnings, solar control film, IR blocking filter, night vision (IR) camera privacy screen or film, and/or laser welding.

## Description

### FIELD OF THE INVENTION

The invention relates to a (meth)acrylic copolymer containing a synergistic blend of impact modifiers and tungsten oxide composite fine particles.

### BACKGROUND OF THE INVENTION

Building structures are prone to heat build-up due to infrared radiation from sunlight being trapped indoors. The rise in heat leads to high costs for cooling the space, especially in warmer climates. There is a need for a passive method to reduce heat from entering buildings and thus reduce energy consumption in moderating interior temperatures.

Presently the problem is solved using window glazing and multilayered/laminated glass, or by using polymer sheets with IR absorbing or reflecting additives to reduce IR wavelengths from transmitting through the sheets. However, the multilayer and multi-step lamination processes significantly drive up the costs of the insulated sheets.

US8083847B2 describes the use of cesium tungsten oxide particles as a film over a thermoplastic, or dispersed in a resin, for providing an infrared-shielding material. The reference fails to teach or suggest the use of impact modifiers, and fails to identify the synergistic infrared-shielding effect of combining impact modifiers with tungsten oxide composite particles in an acrylic composition.

US11130315B2 describes the use of cesium tungsten oxide with a 23 to 25 nm particle diameter, at a 0.5 to 80 weight percent level, dispersed in a thermoplastic for heat ray shielding.

A need remains to simplify the manufacturing processes of the multilayered/laminated sheets, thereby increasing efficiency and lowering costs. There is likewise a need for a transparent, infrared shielding acrylic composition produced without a multi-layer, multi-step process.

### SUMMARY OF THE INVENTION

In one embodiment, the invention relates to an infrared shielding composition having:
a. a (meth)acrylic polymer matrix;
b. 1 to 55, preferably 5 to 50, and more preferably 10 to 45 weight percent of total impact modifiers dispersed within said acrylic matrix;
c. from 0.0001 to 2.0, preferably 0.0005 to 1.0, and more preferably 0.001 to 0.7 weight percent of one or more tungsten oxide composite fine particles;
the weight percentages based on the total weight of the infra-red shielding material.

In a second embodiment, the tungsten oxide composite fine particles have the general formula MₓW_{y}O_{z}, where M is at least one element selected from the group consisting of H, an alkali metal, an alkaline earth metal, a rare earth element, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, I, and mixtures thereof: where W is tungsten; O is oxygen; and the general formula MₓW_{y}O_{z} satisfies 0.001≤x/y≤1 and 2.2≤z/y≤3.0. Preferably M is at least one element selected from the group consisting of Cs, Rb, K, Tl, In, Ba, Li, Ca, Sr, Fe, and Sn.

In another embodiment according to the present invention, the particle size of the tungsten oxide composite particles is less than 800 nm to reduce light scattering in the visible range. The particle diameter is preferably from 1 to 800 nm, 26 to 500 nm, 26 to 300 nm, 26 to 200 nm, and more preferably 100 nm or less. In a preferred embodiment, the average particle size diameter is from 26 to 75 nm, more preferably from 30 to 70 nm, and more preferably from 35 to 65 nm.

In yet another embodiment according to the present invention, the (meth)acrylic polymer comprises at least 60 weight percent of methyl methacrylate monomer units, preferably from 60 to 99.9 weight percent, preferably from 75 to 99 weight percent, and most preferably from 80 to 95 weight percent methyl methacrylate monomer units, and optionally other monomers copolymerizable with methyl methacrylate. The optional other monomer(s) are selected from the group consisting of styrene, alpha methyl styrene, acrylonitrile, methyl acrylate, ethyl acrylate and ethyl methacrylate, butyl acrylate and butyl methacrylate, iso-octyl methacrylate and iso-octyl acrylate, lauryl acrylate and lauryl methacrylate, stearyl acrylate and stearyl methacrylate, isobornyl acrylate and isobornyl methacrylate, methoxy ethyl acrylate and methoxy methacrylate, 2-ethoxy ethyl acrylate and 2-ethoxy ethyl methacrylate, and dimethylamino ethyl acrylate and dimethylamino ethyl methacrylate monomers, (meth) acrylic acids, methacrylic acid, acrylic acid, and mixtures thereof.

In one embodiment of the invention, a profile, sheet, or film, having the composition of the invention may be in the form of a profile, sheet, or film. The profile, sheet, or film may be used as part of greenhouse panels, skylights, window glazing, marine port lighting, roofing covers, roofs for patio, pergola, sunrooms, carports, a heat shielding layer, thermal control layer, roofs, panels, external and internal coverings, and frames, in use for building, greenhouse, window, motor vehicles, rail vehicles, electronics, agricultural films, protective films, siding, window profiles, awnings, solar control film, IR blocking filter, night vision (IR) camera privacy screen or film, and/or laser welding.

### DETAILED DESCRIPTION OF THE INVENTION

"Copolymer" as used herein means a polymer having two or more different monomer units, including copolymers, and polymers with three or more different monomers, such as terpolymers and tetrapolymers. Accordingly, the terms "co-, ter- and tetra-polymer" encompass any polymer having more than one type of comonomer. "Polymer" is used to mean both homopolymer and copolymers. Polymers may be straight chain, branched, star, comb, block, or any other structure. The polymers may be homogeneous, heterogeneous, and may have a gradient distribution of co-monomer units. All references cited are incorporated herein by reference. As used herein, unless otherwise described, percent shall mean weight percent. Molecular weight is a weight average molecular weight as measured by gel permeation chromatography (GPC) using polymethylmethacrylate standards. In cases where the polymer contains some crosslinking, and GPC cannot be applied due to an insoluble polymer fraction, soluble fraction / gel fraction or soluble faction molecular weight after extraction from gel is used to determine weight average molecular weight.

"(Meth)acrylic" or "(meth)acrylate" as used herein denotes both the acrylate and the methacrylate.

The inventors have found a transparent acrylic composition that provides excellent infrared-shielding properties, using a synergistic blend of impact modifiers and low levels of tungsten oxide composite particles, in a monolithic structure.

### (Meth)acrylic copolymer:

In a preferred embodiment of the invention the(meth)acrylic copolymer contains at least 60 weight percent of methyl methacrylate monomer units, preferably from 60 to 99.9 weight percent, preferably from 75 to 99 weight percent, and most preferably from 80 to 95 weight percent methyl methacrylate monomer units.

In some embodiments, the copolymer of the invention, may include 0 to 40 weight percent of other acrylate and methacrylate monomers or other ethylenically unsaturated monomers, included but not limited to, styrene, alpha methyl styrene, acrylonitrile, and crosslinkers at low levels may also be present in the monomer mixture. Suitable acrylate and methacrylate comonomers include, but are not limited to, methyl acrylate, ethyl acrylate and ethyl methacrylate, butyl acrylate and butyl methacrylate, iso-octyl methacrylate and iso-octyl acrylate, lauryl acrylate and lauryl methacrylate, stearyl acrylate and stearyl methacrylate, isobornyl acrylate and isobornyl methacrylate, methoxy ethyl acrylate and methoxy methacrylate, 2-ethoxy ethyl acrylate and 2-ethoxy ethyl methacrylate, and dimethylamino ethyl acrylate and dimethylamino ethyl methacrylate monomers. In addition to the acid and/or anhydride functionality, other functionality can be added to the (meth)acrylic copolymer through functional comonomers, including epoxy (such as glycidyl methacrylate), and hydroxyl groups. Functional monomer units including the acid and anhydride functional monomer units may be present at up to 70 weight percent of the (meth)acrylic polymer.

In one embodiment, the (meth)acrylic copolymer has a high Tg of greater than 115°C, more preferably greater than 120°C, greater than 125°C, greater than 130°C, greater than 135°C, and even greater than 140°C. In the alternative, a still suitable Tg may be lower, e.g. greater than 100°C or from 100°C to 105°C or greater than 105°C. Useful high Tg monomers include, but are not limited to tert-butyl cyclohexyl methacrylate, 3,3,5-trimethylcyclohexyl(meth)acrylate, alpha methyl styrene, maleimide, isobornyl methacrylate, norbornyl methacrylate, t-butyl methacrylate, cyclohexyl methacrylate, acrylamide and methacrylamide. The high Tg monomer units may be present at levels of 0 to 25 weight percent, and more preferably from 0 to 10 weight percent.

### Impact Modifier

The composition may be impact modified. Useful impact modifiers include block copolymers, graft copolymers, and core/shell impact modifiers. The level of impact modifier can be adjusted to meet the toughness needs for the end use of the composition. In one embodiment, for compositions with high optical clarity, the impact modifiers are refractive-index matched to the matrix polymer. In this respect, refractive index matched means the difference in refractive index between the impact modifiers and matrix copolymer is plus or minus 0.02 or less, preferably less than 0.01, and most preferably less than 0.05.

Core-shell impact modifiers may have a soft or a hard core. The core is preferably a hard core.

Impact modifiers may be present at from, preferably from 1 to 55 weight percent, more preferably from 5 to 50 weight percent, and more preferably 10 to 45 weight percent based on the weight of the whole copolymer composition.

### Tungsten Oxide Composite

The composition of the invention contains from 0.0001 to 2.0 weight percent of tungsten oxide composite particles, preferably from 0.0005 to 1.0 weight percent, and more preferably from 0.001 to 0.7 weight percent, based on the entire impact modifies acrylic composition.

While tungsten trioxide contains essentially no free electrons, and therefore little absorption in the near-infrared region, it is known that free electrons are generated in a tungsten oxide if the ratio of oxygen to tungsten is equal to or less than 3.

By adding an element M to the tungsten oxide, a tungsten oxide composite is obtained. This tungsten oxide composite generates free electrons, creating an IR adsorption property in the wavelength region around 1000 nm. The tungsten oxide composite fine particles of the invention have the general formula MₓW_{y}O_{z}, where M is at least one element selected from the group consisting of H, an alkali metal, an alkaline earth metal, a rare earth element, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, I, and mixtures thereof; W is tungsten; and O is oxygen; and the general formula MₓW_{y}O_{z} satisfies 0.001≤x/y≤1. Preferably the tungsten oxide composite particles contain at least one element selected from the group consisting of Cs, Rb, K, Tl, In, Ba, Li, Ca, Sr, Fe, and Sn.

In a preferred embodiment, the element M is more than one kind of element.

In one embodiment, x, and y comply with the formulas 0.1≤x≤0.5, and 2.2≤y≤3.0.

When x/y is greater than 0.001, a sufficient number of free electrons are generated. The supply of free electrons is further increased by increasing the level of M, thereby increasing the infrared-shielding effect. The infrared-shielding effect may become saturated at an x/y value around 1.

The z/y ratio in W_{y}O_{z} shows the control of the amount of oxygen, and preferably satisfies the expression 2.2≤z/y≤3.0 in the visible range. The particle diameter is preferably from 26 to 500nm, 26 to 300 nm, 26 to 200nm, and more preferably 100 nm or less. In a preferred embodiment, the average particle size diameter is from 26 to 75 nm, more preferably from 30 to 70 nm, and more preferably from 35 to 65 nm.

The tungsten oxide composite particles can be produced by known means, such as the processes described in US 8,083,847 B2.

### Additives

The composition of the invention may be blended with typical additives used in thermoplastics. The additives may be added to the composition prior to crosslinking. Useful additives include, but are not limited to, fillers, surface modifying additives, nucleating agents, blowing agents, flow promoters, fibers, antioxidants, UV stabilizers, processing aids, fibers, lubricant agents, heat stabilizers, flame retardants, synergists, pigments and other coloring agents, and other compatible polymers. Some additives especially useful in the compositions of the invention include zinc stearate, stearic alcohol, and stearic acid.

If used, such additives are used at an effective amount to achieve the desired result. The amount may be 0.001 weight percent or greater, 0.01 weight percent or greater, 0.1 weight percent or greater, 1.0 weight percent or greater, 2.0 weight percent or greater, 3.0 weight percent or greater, and up to 40 weight percent or less, 30 weight percent or less, 20 weight percent or less, 15 weight percent or less, 10 weight percent or less, 5 weight percent or less, based on the weight of the whole composition.

Other polymer additives could include polycarbonates, polyurethanes, polysulfones, polyamides, polyolefin including copolymers and terpolymers based on these polymers, and including linear, branched, block, and grafted polymer structures. Examples of matting agents include, but are not limited to, crosslinked polymer particles of various geometries.

### COMPOUNDING/PROCESSING

The acrylic polymer, impact modifiers, tungsten oxide composite particles and other additives may be compounded by means known in the art, such as melt-blending using a twin-screw extruder. The impact modifiers, tungsten oxide composite particles, and other additives may be blended together prior to being added to the polymer melt - perhaps as a master batch, or may be added separately.

The composition can be extruded directly into profiles, monolithic sheets or films, or may be extruded into strands that are cut into pellets, and can be later processed by melt compounding methods.

The IR absorbing (meth)acrylic composition may be extruded into sheets and thermoformed into end products, such as into greenhouse panels or co-extruded for windows and skylights to reduce heat-buildup in buildings. Sheets and films can be of any useful thickness.

The composition of the invention can also be used in a cell-cast or continuous cast process, adding the impact modifiers and tungsten oxide complex to the cell-cast mold dispersed in the partially polymerized syrup.

While useful as a monolithic sheet or film, the composition of the invention may also be laminated onto objects, including but not limited to, for example, glass, polycarbonate, polyethylene terephthalate (PET), acrylonitrile butadiene styrene (ABS), polymethyl methacrylate, and other similar materials.

### PROPERTIES

In certain embodiments, the compositions disclosed herein provide infrared shielding and excellent transparency. The composition may be especially useful in environments with high infrared radiation - as in most outdoor applications. According to aspects of the present invention, the material may have superior IR absorbing capabilities from 800 nm to 2500 nm while having thermal and light stabilities, and impact resistance. Surprisingly, a synergy was found when impact modifiers are incorporated into the composition, since they further enhance the composition's IR absorbing performance. Weatherability, thermal stability, and the processing step were not compromised. The addition of impact modifiers further allowed the extruded sheets to easily be handled during assembly for building and greenhouse panels.

Since the loading of the tungsten oxide composite may be low, certain embodiments may provide for a high transmittance in the visible spectrum of greater than 76% which is crucial for plant growth in a greenhouse panel application.

According to certain embodiments, materials made from the composition of the invention are substantially optically clear, and have a haze of less than 2%.

In one embodiment, the transparent materials produced from the composition of the invention have a blue tint.

### APPLICATIONS

The composition of the claims can be used in any application where acrylics are used, and is especially useful in outdoor applications. Useful applications include, but are not limited to a heat shielding layer, thermal control layer, roofs, panels, external and internal coverings, and frames, in use for building, greenhouse panels, window, motor vehicles, rail vehicles, electronics, skylights, window glazing, marine port lighting, roofing covers, roofs for patio, pergola, sunrooms, carports, agricultural films, protective films, siding, window profiles, awnings, solar control film, IR blocking filter, night vision (IR) camera privacy screen or film, and/or laser welding.

### EXAMPLES

Injection molded samples: In the testing involving injection molded samples or plaques, the plaque sample size was molded at 45 mm (width) x 67 mm (length) x 3.2 mm (thickness). The plaques were formed by (injection molding, using a Demag injection molding machine.

Melt flow rate (MFR) measurement: Instron Ceast MF30 equipment was used for polymers in melt flow rate measurements. The die temperature was controlled at 230°C while the loading cell weight was at 3.8 kg. The dried pellets were annealed at ~20°C below the T_{g} over 8 hours.

Differential scanning calorimetry (DSC) for weight average molecular weigth (Mw), number average molecular weight (Mn) and Z average molecular weight (Mz): The glass transition temperatures of (meth)acrylic polymers were measured at a heating rate of 10°C/minutes in N₂ using TA instruments Q2000 DSC, during the second heating. The first heating was used to heat the sample to 170°C at a heating rate of 10°C/minute, then, the sample was cooled down to 0°C at a cooling rate of 10°C/minute. The sample weight was controlled at 5-10 mg.

Vicat softening temperatures: The samples were tested in Instron HV6M under 10N and 50N external forces using ASTM method D1525. The sample heating rate was controlled at the speed of 50°C/hour. The injection molded samples were annealed at ~20°C below the Tg value for 16 hours and were kept in a desiccator oven before testing.

Notched Izod impact: Notched Izod impact strength or resistance was measured using ASTM D256 method with a 1.0 J impact hammer at 23°C/50% relative humidity. On a Ceast Resil Impactor at room temperature. The notched Izod bars were injection-molded at the size of 10.2 mm (width) x 100 mm (long) x3.2 mm (thick).

Haze: Optical haze of clear film and/or plaque samples was measured using BYK HazeGard Plus under ASTM method D1003.

Light Transmittance: The total light transmittance was measured from plaque samples in a transmission mode using Perkin Elmer Lambda 950 with a 150 mm integrating sphere. The selected wavelength range was from 200 nm to 2500 nm in UV/Vis region.

Solar Energy Transmittance: The solar energy transmittance was calculated on a weighted base of solar irradiance and divided by total solar energy (1002 W/m²) to obtain transmission percentage. First, the transmittance of the PMMA sample plaques is obtained using a Perkin Elmer Lambda 950 with a 150 mm integrating sphere from 280 nm to 2500 nm. Using data on solar irradiance spectra (global tilt) at the same wavelength range, the transmittance in percentage, was multiplied with solar irradiance at the corresponding wavelengths to obtain the solar power that transmits through the PMMA sample. The transmitted power is then divided by the total solar irradiance in the 280 nm to 2500 nm range (1002.877 W/m²) to obtain the percentage of solar power transmitted through the material.

Transmittance at 1000 nm after 2^{nd} processing cycle: After the first extrusion step to compound the material, the same material is then passed through the extruder again for the 2^{nd} processing step. The resin was then molded into 45 mm (width) x 67 mm (length) x 3.2 mm (thickness) plaques and the plaque is measured using Perkin Elmer Lambda 950 with a 150 mm integrating sphere. The selected wavelength range was from 200 nm to 2500 nm in UV/Vis region.

Particle size: The particle size was determined using an SEM (Scanning Electron Microscope - Hitachi SU8010 field emission electron microscope) to determine the average diameter of the tungsten oxide particles. This is estimated by measuring the particle diameter using an SEM image to get the average particle size.

### Materials

**PMMA-1:** Non-impact modified poly(methyl methacrylate) copolymer, with a melt flow rate (MFR) of 2.3 g/10min at 230°C/3.8kG.

**PMMA-2:** impact modified poly(methyl methacrylate) copolymer having 35-50 wt% of core-shell impact modifiers, with a melt flow rate (MFR) of 1 g/10min at 230°C/3.8kg.

**PMMA-3:** Non-impact modified poly(methyl methacrylate) copolymer, with a melt flow rate (MFR) of 3.7 g/10min at 230°C/3.8kg.

**IR Additive 1:** cesium tungsten oxide masterbatch in PMMA sold by Everlight Chemical. Tungsten oxide content is 1% loading, particle dimension ranges 45 nm +/- 19 nm.

**IR Additive 2:** Epolight^{®} 2057 monovalent amminium dye sold by Epolin was compounded into PMMA at 1 wt% loading.

**IR Additive 3:** NIR1072C additive sold by QCR was compounded into PMMA at 1 wt% loading. NIR1072C is an organic dye.

Formulations were mixed and compounded using a 27 mm twin screw extruder. Testing specimens were prepared with Demag injection molding machine.

### EXAMPLE 1

### Formulations:

**Table 1**

| ***Formulation*** | **A (Control)** | **B (Control)** | **C (Control)** | **D (Comp.)** | **E (Inv.)** | **F (Inv.)** | **G (Inv.)** | **H (Comp.)** | **I (Comp.)** |
|---|---|---|---|---|---|---|---|---|---|
| | *%* | *%* | *%* | *%* | *%* | *%* | *%* | *%* | *%* |
| PMMA-1 | 100 | 75 | 0 | 96 | 71 | 72.5 | 0 | 70 | 70 |
| PMMA-2 | 0 | 25 | 25 | 0 | 25 | 25 | 25 | 25 | 25 |
| PMMA-3 | 0 | 0 | 75 | 0 | 0 | 0 | 71 | 0 | 0 |
| IR add 1 | 0 | 0 | 0 | 4 | 4 | 2.5 | 4 | 0 | 0 |
| IR Add. 2 | 0 | 0 | 0 | 0 | 0 | 0 | 0 | 5 | 0 |
| IR Add. 3 | 0 | 0 | 0 | 0 | 0 | 0 | 0 | 0 | 5 |

**Table 2**

| ***Properties*** | **A (Control)** | **B (Control)** | **C (Control)** | **D (Comp.)** | **E (Inv.)** |
|---|---|---|---|---|---|
| Haze, % | 0.40 | 0.78 | 0.87 | 1.66 | 1.82 |
| Transmittance at 500 nm, % | 92.1 | 91.4 | 91.3 | 81.5 | 76.8 |
| Transmittance at 1000 nm, % | 91.2 | 91.1 | 90.8 | 21.1 | 12.0 |
| Transmittance at 1500 nm, % | 87.1 | 86.9 | 86.7 | 10.6 | 5.2 |
| Solar Energy Transmittance, % | 82.8 | 82.0 | 81.8 | 49.2 | 41.2 |
| Transmittance at 1000 nm after 2^{nd} processing cycle, % | - | - | - | 22.1 | 10.4 |
| Transmittance of D7869 - 500 hours at 1000 nm, % | 91.2 | 90.8 | 90.7 | 9.1 | 11 |
| Notched Izod Impact, ft*lb/in | 0.3 | 0.457 | 0.470 | 0.438 | 0.460 |
| Vicat Temp. under 10 N, °C | 103 | 106 | 112 | 106 | 106 |
| Vicat Temp. under 50 N, °C | 97 | 97.1 | 103 | 96.9 | 97.1 |

**Table 3**

| ***Properties*** | **F (Inv.)** | **G (Inv.)** | **H (Comp.)** | **I (Comp.)** |
|---|---|---|---|---|
| Haze, % | 1.4 | 1.87 | 1.18 | 1.9 |
| Transmittance at 500 nm, % | 82.1 | 77.3 | 87.0 | 86.5 |
| Transmittance at 1000 nm, % | 24.2 | 11.0 | 71.9 | 79.5 |
| Transmittance at 1500 nm, % | 13.5 | 4.5 | 86.0 | 80.1 |
| Solar Energy Transmittance, % | 50.0 | 41.7 | 76.3 | 75.6 |
| Transmittance at 1000 nm after 2^{nd} processing cycle, % | 22.2 | - | 75.3 | 80.8 |
| Transmittance of D7869 - 500 hrs at 1000 nm, % | 24.2 | 9.9 | 83.2 | 85.3 |
| Notched Izod Impact, ft*lb/in | 0.459 | 0.464 | 0.460 | 0.468 |
| Vicat Temp. under 10 N, °C | 106 | 112 | 106 | 106 |
| Vicat Temp. under 50 N, °C | 96.8 | 102 | 96.7 | 97.0 |

### EXAMPLE 2

### Formulation (lower loadings of ST19017):

**Table 4**

| ***Formulation*** | **J (Inv.)** | **K (Inv.)** | **L (Inv.)** | **M (Inv.)** |
|---|---|---|---|---|
| | *%* | *%* | *%* | *%* |
| PMMA-1 | 73.75 | 74.00 | 74.25 | 74.50 |
| PMMA-2 | 25.00 | 25.00 | 25.00 | 25.00 |
| PMMA-3 | 0 | 0 | 0 | 0 |
| IR add 1 | 1.25 | 1.0 | 0.75 | 0.50 |
| IR add 2 | 0 | 0 | 0 | 0 |
| IR add 3 | 0 | 0 | 0 | 0 |

**Table 5**

| ***Properties*** | **J (Inv.)** | **K (Inv.)** | **L (Inv.)** | **M (Inv.)** |
|---|---|---|---|---|
| Transmittance at 500 nm, % | 85.6 | 87.0 | 88.2 | 89.2 |
| Transmittance at 1000 nm, % | 47.2 | 52.9 | 60.8 | 69.3 |
| Transmittance at 1500 nm, % | 35.0 | 41.1 | 50.1 | 60.5 |
| Solar Energy Transmittance, % | 61.8 | 64.8 | 68.6 | 72.6 |

### Observed changes in IR absorption performance after accelerated weathering:

Formulation without impact modifiers appeared to have light instability after being exposed to weathering for over 3000 hours where a significant drop in transmittance after 250 hours and continue to decrease over time was observed. The materials with impact modifiers did not have a significant decrease in transmittance and have relatively similar transmittance over the weathering period.

| ***Properties*** | **D (Comp.)** | **E (Inv.)** | **F (Inv.)** |
|---|---|---|---|
| Initial transmittance of D7869 at 1000 nm, % | 21.1 | 12.0 | 23.9 |
| Transmittance after 250 hours of D7869 at 1000 nm, % | 10.2 | 10.7 | 23.4 |
| Transmittance after 500 hours of D7869 at 1000 nm, % | 9.1 | 11.0 | 24.2 |
| Transmittance after 1000 hours of D7869 at 1000 nm, % | 8.3 | 11.4 | 25.2 |
| Transmittance after 3000 hours of D7869 at 1000 nm, % | 6.8 | 10.7 | 25.6 |

### Example Summary:

These examples illustrate how the control materials, PMMA with and without impact modifiers, have high transmittance in the visible (350 to 800 nm) and infrared (800 to 2500 nm) regimes. When cesium tungsten oxide is added, the transmittance in the infrared regime significantly decreases and reduces heat build-up in the process. The addition of impact modifiers further enhances IR absorption and reduced transmittance in the IR wavelengths - theoretically allowing lower loadings of tungsten oxide by 35% to achieve similar IR absorption in PMMA without impact modifiers. The impact modifiers also provide the impact resistance and integrity to the PMMA extruded sheets, enabling ease of handling, without the need of other substrates (PC, PC/ABS). Example H and I utilized other commercial IR additives but they both lacked IR absorbing performance in the 800-2500 nm regime, thermally unstable after 2^{nd} processing cycles, and lose their IR absorbing performance after 500 hours of weathering.

## Claims

1. An infrared shielding composition comprising:
a. a (meth)acrylic polymer matrix;
b. 1 to 55, preferably 5 to 50, and more preferably 10 to 45 weight percent of impact modifiers dispersed within said (meth)acrylic matrix;
c. from 0.0001 to 2.0, preferably 0.0005 to 1.0, and more preferably 0.001 to 0.7 weight percent of one or more tungsten oxide composite fine particles dispersed within said (meth)acrylic matrix;
the weight percentages based on the total weight of the infrared shielding composition.

2. The infrared shielding composition of claim 1, wherein said tungsten oxide composite fine particles have the general formula MₓW_{y}O_{z}, where M is at least one element selected from the group consisting of H, an alkali metal, an alkaline earth metal, a rare earth element, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, I, and mixtures thereof:
W is tungsten; O is oxygen; the general formula MₓW_{y}O_{z} satisfies 0.001≤x/y≤1; and 2.2:≤z/y≤3.

3. The infrared shielding composition of claim 1 or 2, wherein the average particle diameter of tungsten oxide composite fine particles is less 800 nm, preferably from 1 to 800 nm, 26 to 500nm, 26 to 300 nm, 26 to 200nm, and more preferably 100 nm or less, preferably the average particle size diameter is from 26 to 75 nm, more preferably from 30 to 70 nm, and more preferably from 35 to 65 nm.

4. The infrared shielding composition of claim 2 or of claim 2 and 3, wherein M is at least one element selected from the group consisting of Cs, Rb, K, Tl, In, Ba, Li, Ca, Sr, Fe, and Sn.

5. The infrared shielding composition of any one of claims 1 to 4 wherein x, and y comply with the formulas 0.1≤x≤0.5, and 2.2≤y≤3.0.

6. The infrared shielding composition of any one of claims 1 to 5, wherein the (meth)acrylic polymer comprises at least 60 weight percent of methyl methacrylate monomer units, preferably from 60 to 99.9 weight percent, preferably from 75 to 99 weight percent, and most preferably from 80 to 95 weight percent methyl methacrylate monomer units, and optionally other monomers copolymerizable with methyl methacrylate.

7. The infrared shielding composition of any one of claims 1 to 6, wherein said optional other monomer units copolymerizable with methyl methacrylate are selected from the group consisting of styrene, alpha methyl styrene, acrylonitrile, methyl acrylate, ethyl acrylate and ethyl methacrylate, butyl acrylate and butyl methacrylate, iso-octyl methacrylate and iso-octyl acrylate, lauryl acrylate and lauryl methacrylate, stearyl acrylate and stearyl methacrylate, isobornyl acrylate and isobornyl methacrylate, methoxy ethyl acrylate and methoxy methacrylate, 2-ethoxy ethyl acrylate and 2-ethoxy ethyl methacrylate, and dimethylamino ethyl acrylate and dimethylamino ethyl methacrylate monomers, (meth) acrylic acids, methacrylic acid, acrylic acid, and mixtures thereof.

8. The (meth)acrylic polymer of any one of claims 1 to 7, wherein said polymer has a Tg of greater than 115°C, preferably greater than 120 °C.

9. A profile, sheet, or film, comprising the composition of any one of claims 1 to 8.

10. The profile, sheet, or film of claim 9, wherein said profile, sheet or film is a part of a heat shielding layer, thermal control layer, roofs, panels, external and internal coverings, and frames, in use for building, greenhouse panels, window, motor vehicles, rail vehicles, electronics, skylights, window glazing, marine port lighting, roofing covers, roofs for patio, pergola, sunrooms, carports, agricultural films, protective films, siding, window profiles, awnings, solar control film, IR blocking filter, night vision (IR) camera privacy screen or film, and/or laser welding.
